# EUROPÄISCHE PATENTSCHRIFT

(11) **EP 3 014 584 B1**
(45) Veröffentlichungstag und Bekanntmachung des Hinweises auf die Patenterteilung: **11.08.2021**
(21) Anmeldenummer: 14723394.4
(22) Anmeldetag: 30.04.2014
(51) Int. Cl.: G07C 5/00

(54) **SYSTEM ZUM ERFASSEN VON KOMPONENTEN EINES FAHRZEUGS**
SYSTEM FOR DETECTING COMPONENTS OF A VEHICLE
SYSTÈME POUR DÉTECTER DES COMPOSANTS D'UN VÉHICULE

(30) Priorität: 26.06.2013 DE 102013212351
(43) Veröffentlichungstag der Anmeldung: 04.05.2016
(73) Patentinhaber: Robert Bosch GmbH, 70442 Stuttgart (DE)
(72) Erfinder: HIERONYMI, Felix, 71696 Moeglingen (DE)
(86) Internationale Anmeldenummer: PCT/EP2014/058930
(87) Internationale Veröffentlichungsnummer: WO 2014/206611

(56) Entgegenhaltungen:
- EP-A1- 1 936 570
- WO-A1-2008/000603
- DE-A1- 10 324 083
- DE-A1-102007 050 994
- US-A1- 2007 094 089
- US-B2- 7 506 309

## Beschreibung

### Stand der Technik

In einem (Kraft-) Fahrzeug sind viele verschiedene, teilweise komplexe, Komponenten zu einem Gesamtsystem verbaut. Die meisten, insbesondere die wichtigen, Komponenten haben eine optische Kennung (z.B. Q-Codes, Barcodes, gestanzte Seriennummer etc.), die eine Art eindeutige Seriennummer bzw. einen Identifier enthält. Sind die Komponenten (wie z.B. ein Injektor) im Fahrzeug verbaut, kann die Seriennummer oft nicht oder nur unter großen Schwierigkeiten abgelesen werden, um die Komponente zu identifizieren. Auch wird beim Ersetzen von Komponenten deren Seriennummer häufig nicht erfasst, so dass die komplette Komponenten-Konfiguration des Fahrzeugs nicht mehr bzw. nur mit hohem Aufwand rekonstruiert werden kann.

Auch ist für eine einzelne Komponente häufig unbekannt, wo, wann und wie sie eingebaut und genutzt worden ist. Diese Information ist zum Beispiel bei Garantie-Ansprüchen, Feldbeobachtungsaktivitäten, insbesondere zur Ableitung von System-Design und -Auslegung, und Runderneuerung zur Wiederverwendung wichtig. Auch ist oftmals die genaue Einbauposition, z.B. welcher Injektor in welchen Zylinder eingebaut ist, was z.B. bei der Motor-Diagnose hilfreich wäre, nicht bekannt.

Aus der US 7,506,309 B2 ist ein Verfahren zum Managen von Fahrzeugsoftwarekonfigurationsupdates bekannt.

Softwarekonfigurationsupdatedaten für das Fahrzeug werden von einer zentralen Datenbank eines Call Centers oder einer Telematikeinheit angefordert.

Fahrzeugsoftwarekonfigurationsdaten, die eine Fahrzeugsoftwarekonfiguration darstellen, werden abgerufen. Es wird geprüft, ob die Softwarekonfigurationsupdatedaten den Fahrzeugsoftwarekonfigurationsdaten entsprechen. Basierend auf dem Prüfergebnis wird ein Softwaremodul vom Call Center zur Telematikeinheit über ein Drahtlosnetzwerk versandt.

### Offenbarung der Erfindung

Es ist daher eine Aufgabe der Erfindung, ein System zur Verfügung zu stellen, das es ermöglicht, einfach, zuverlässig und schnell Informationen über die Konfiguration eines Kraftfahrzeugs, im Folgenden auch einfach "Fahrzeug" genannt, insbesondere die Verwendung und den Einbauort von im Fahrzeug verwendeten Komponenten, zur Verfügung zu stellen.

Die gestellte Aufgabe wird durch ein System zum Erfassen von Komponenten eines Kraftfahrzeugs gemäß Anspruch 1 gelöst.

Die Erfindung umfasst auch ein Verfahren zum Erfassen von Komponenten eines Kraftfahrzeugs gemäß Anspruch 9.

Anhand der an die Empfangsvorrichtung übertragenen Daten können die Art, die Anzahl und die Identität der im Fahrzeug verbauten Komponenten identifiziert und insbesondere die Gesamtkonfiguration des Fahrzeugs mit den im Fahrzeug verbauten Komponenten erfasst werden.

Dazu umfasst das System auch eine Auswertevorrichtung, die ausgebildet ist, die an die Empfangsvorrichtung übertragenen Daten auszuwerten, um die Art, Anzahl und Identität der in dem Fahrzeug verbauten Komponenten zu bestimmen und ggf. auf einer Anzeigevorrichtung anzuzeigen.

Das System weist zusätzlich eine außerhalb des Fahrzeugs angeordnete Sendevorrichtung und eine im Fahrzeug angeordnete Fahrzeug-Empfangsvorrichtung auf. Ein derartiges System ermöglicht es, zusätzlich Daten von außen, z.B. vom einem Server, an das Fahrzeug zu übertragen.

Auf diese Weise kann insbesondere die Fahrzeug- bzw. Motorsteuerung angepasst bzw. umprogrammiert werden, insbesondere nachdem neue Komponenten im Fahrzeug verbaut und vom System identifiziert worden sind, um die Fahrzeug- bzw. Motorsteuerung an die neuen Komponenten anzupassen.

Dazu kann anhand der von der Auswertevorrichtung ermittelten Komponenten-Konfiguration des Fahrzeugs eine für die aktuelle Komponenten-Konfiguration optimale Steuergerät-Software ermittelt und aus einem Software-Speicher, in dem die Steuergerät-Software gespeichert ist, über die Sendevorrichtung und die Fahrzeug-Empfangsvorrichtung an das Fahrzeug, insbesondere das Fahrzeug-Steuergerät, übertragen und in das Fahrzeug-Steuergerät eingespielt werden. So können das Fahrzeug und insbesondere der Motor des Fahrzeugs stets mit einem Fahrzeug-Steuergerät betrieben werden, das optimal an die aktuelle Komponenten-Konfiguration des Fahrzeugs angepasst ist.

Die Software kann sowohl aktualisiert werden, wenn sich die Komponenten-Konfiguration des Fahrzeugs, d.h. insbesondere die Art, Anzahl und/oder Identität der im Fahrzeug verbauten Komponenten, geändert hat, als auch, wenn im Software-Speicher des Werkstattsystems für die Kombination der aktuell im Fahrzeug verbauten Komponenten eine neue, aktualisierte Software zur Verfügung steht.

Insbesondere hat das System wenigstens eine Speichervorrichtung, die zur Speicherung von Komponenten-Identifikationsdatensätzen, die jeweils einer Komponente zu geordnet sind, ausgebildet ist, und eine Vergleichseinheit, die ausgebildet ist, um die an die Empfangsvorrichtung übertragenen Daten mit Daten, die in den Komponenten-Identifikationsdatensätzen enthalten sind, zu vergleichen und so einen Komponenten-Identifikationsdatensatz zu identifizieren, der Daten enthält, die mit den an die Empfangsvorrichtung übertragenen Daten übereinstimmen, um auf diese Weise Art, Anzahl und/oder Identität der in dem Fahrzeug verbauten Komponenten zu bestimmen.

In einer Ausführungsform weist die Auswertevorrichtung zusätzlich auch eine Konfigurationsvergleichsvorrichtung auf, die ausgebildet ist, um die aktuelle Konfiguration eines Fahrzeugs mit einer zu einem früheren Zeitpunkt gespeicherten Konfiguration desselben Fahrzeugs zu vergleichen und mögliche Veränderungen der Konfiguration des Fahrzeugs zu erfassen und ggf. anzuzeigen.

Durch den Einsatz eines erfindungsgemäßen Systems ist die Gesamtkonfiguration der Komponenten im Fahrzeug jederzeit nachvollziehbar und kann nur mit hohem Aufwand absichtlich manipuliert oder versehentlich unbemerkt geändert werden. Eine insbesondere für Test- und/oder Erprobungsphasen notwendige "manuelle" Erfassung der im Fahrzeug verbauten Komponenten entfällt. Der damit verbundene Aufwand und mögliche Erfassungs- und Übertragungsfehler können vermieden werden.

In einer bevorzugten Ausführungsform ist das Empfangsgerät, das zum Empfangen der von der Fahrzeug-Sendevorrichtung ausgesendeten Daten ausgebildet ist, Bestandteil des Systems.

In einer weiteren bevorzugten Ausführungsform ist das Empfangsgerät mit einer weiteren Speichervorrichtung verbunden und/oder ausgestattet, wobei die Speichervorrichtung ausgebildet ist, um die von dem Empfangsgerät empfangenen Daten zu speichern. Auf diese Weise kann in dem Empfangsgerät stets ein aktuelles Abbild der Konfiguration des Fahrzeugs vorgehalten werden, das bei Bedarf jederzeit abrufbar ist.

In einer Ausführungsform umfasst das System wenigstens ein drahtlos auslesbares passives Speicherelement, das keine eigene Energiequelle aufweist. Passive Speicherelemente sind besonders kostengünstig zu realisieren, können einfach installiert werden und haben einen geringen Wartungsaufwand, da sie keine eigene Energieversorgung benötigen, die regelmäßig überwacht und ggf. geladen oder ausgetauscht werden muss. Als passive Speicherelemente haben sich insbesondere RFID-Elemente bewährt, die zu geringen Preisen am Markt erhältlich sind.

Um ein derartiges RFID-Element auszulesen, erzeugt die Empfangsvorrichtung ein hochfrequentes elektromagnetisches Wechselfeld, dem das RFID-Element ausgesetzt wird. Die von dem RFID-Element aus dem elektromagnetischen Wechselfeld aufgenommene Hochfrequenzenergie dient als Energieversorgung für die Datenübertragung.

Das elektromagnetische Wechselfeld aktivierte einen im RFID-Tag vorhandenen Mikrochip, der die von der Empfangsvorrichtung gesendeten Befehle dekodiert. Die Antwort codiert und moduliert das RFID-Element in das eingestrahlte elektromagnetische Feld durch Feldschwächung im kontaktfreien Kurzschluss oder gegenphasige Reflexion des von der Empfangsvorrichtung ausgesendeten Feldes. Auf diese Weise überträgt das RFID-Element beispielsweise seine eigene Seriennummer, weitere Daten des gekennzeichneten Objekts und/oder andere vom Lesegerät abgefragte Information. Das RFID-Element selbst erzeugt dabei kein elektromagnetisches Feld, sondern beeinflusst das elektromagnetische Feld, das von der der Empfangsvorrichtung erzeugt worden ist.

Alternativ oder zusätzlich kann das System auch wenigstens ein aktives Speicherelement aufweisen, das mit einer eigenen Energiequelle und einer Sendeeinheit ausgestattet ist, die durch eine externes elektromagnetisches Feld aktivierbar und ausgebildet ist, selbst als Sender für ein elektromagnetisches Feld zu dienen. Aktive Speicherelemente können im Vergleich zu passiven Speicherelementen aus einer größeren Entfernung ausgelesen werden.

Die Speicherelemente können auch "halb-aktiv" ausgebildet sind. Bei halbaktiven Tags übernimmt eine eigene Energiequelle des Speicherelements die Versorgung des Mikrochips, in dem die Daten gespeichert sind; die Datenübertragung erfolgt aber, wie zuvor für ein RFID-Element beschrieben.

In einer Ausführungsform sind die Sende- und Empfangsvorrichtungen ausgebildet, um Daten mit Hilfe von Infrarotstrahlung oder unter Nutzung eines Funknetzes, wie z.B. ein Mobilfunknetz, WLAN, Bluetooth® und/oder das Internet, zu übertragen. Mobilfunknetze, WLAN, Bluetooth® und/oder das Internet stellen bewährte und kostengünstige Netze zur Verfügung, die zur Datenübertragung geeignet sind.

Das System kann insbesondere so eingerichtet sein, dass beim Starten und/oder Stoppen des Fahrzeugs bzw. seines Motors Daten aus den im Fahrzeug vorhandenen Speicherelementen ausgelesen und von der Sendevorrichtung ausgesendet werden. Dies kann bei jedem Starten und/oder Stoppen des Fahrzeugs oder nach einer vorgegebenen Anzahl von Start- und/oder Stoppvorgängen erfolgen.

Auf diese Weise wird sichergestellt, dass stets die aktuelle Konfiguration des Fahrzeugs an die Empfangsvorrichtung übertragen und in der Speichervorrichtung abgespeichert wird.

Das System kann eine im Fahrzeug installierte Fahrzeugkonfigurationsvergleichsvorrichtung aufweisen, welche die aktuell ermittelte Konfiguration mit einer zuvor gespeicherten Konfiguration vergleicht und die aktuelle Komponenten-Konfiguration nur dann aussendet, wenn sie sich von der zuvor gespeicherten Komponenten-Konfiguration unterscheidet. Auf diese Weise kann der Umfang der Datenübertragung auf das notwendige Maß reduziert werden, und die Kosten und der Energieverbrauch für eine unnötige Übertragung von Daten, die bereits in der Speichervorrichtung gespeichert sind, können eingespart werden.

In einer Ausführungsform ermöglicht es das System auch, konkrete Einbaupositionen von Komponenten im Fahrzeug zu bestimmen. Dazu kann die Einbauposition einer ab Werk im Fahrzeug verbauten Komponente als Datum in einem der Komponente zugeordneten Datensatz gespeichert werden. Wird die Komponente ersetzt, wir die vorhandene Information über den Einbauort auf die neue Komponente übertragen, so dass im Folgenden auch Einbauort der Austauschkomponente bekannt ist.

Auch können im Fahrzeug mehrere Datenlesevorrichtungen verbaut sei. In diesem Fall kann die Position eines Speicherelements im Fahrzeug und damit die Einbauposition einer Komponente anhand unterschiedlicher Empfangssignalstärken ("relative signal strength intensity", RSSI), die an den verschiedenen Datenlesevorrichtungen auftreten, bestimmt werden. Dies ist insbesondere dann möglich, wenn, wie z.B. für die Räder, die Anzahl der möglichen Einbaupositionen begrenzt ist, so dass eine zonenbasierte Ortung ("Zoning") möglich ist. In einem solchen Fall ist eine grobe Ortsbestimmung eines Speicherelements ausreichend, um es einer Zone und einer in der Zone angeordneten Einbauposition zuordnen zu können.

Alternativ oder zusätzlich ist durch eine geeignete Auswertung der Empfangssignalstärken von wenigstens drei Datenlesevorrichtungen auch eine Bestimmung der Einbauposition durch Triangulation möglich.

### Figurenbeschreibung

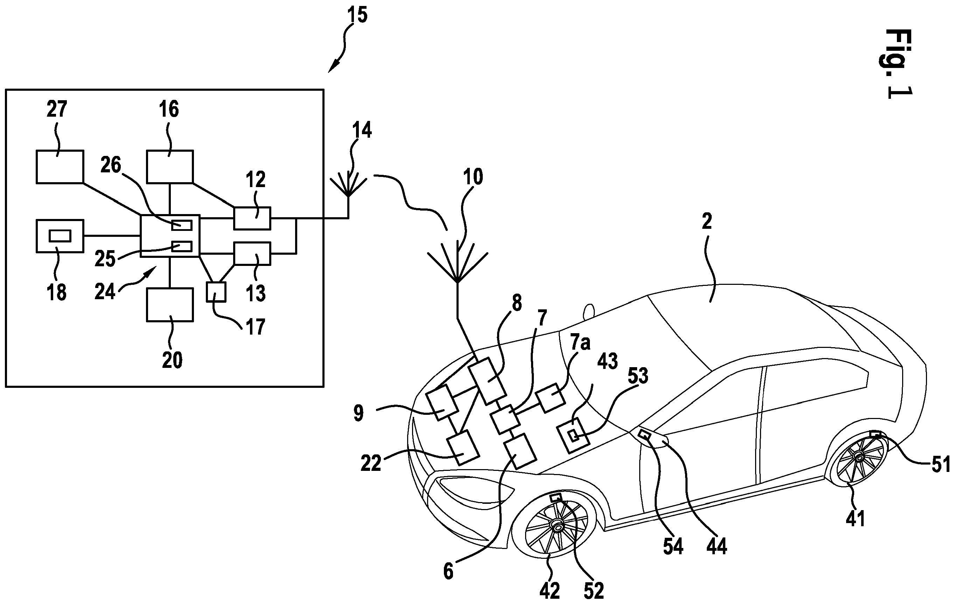

Die Figur zeigt eine schematische Ansicht eines Ausführungsbeispiels eines erfindungsgemäßen Systems zum Erfassen einer Komponenten-Konfiguration eines Fahrzeugs 2, die die Art, Anzahl und/oder Identität der im Fahrzeug 2 verbauten Komponenten 41, 42, 43, 44 umfasst.

Ein Fahrzeug 2 weist mehrere Komponenten 41, 42, 43, 44, z.B. Räder bzw. Reifen 41, 42, Außenspiegel 44, Lichtmaschine oder Einspritzpumpe 43 usw. auf, an denen jeweils ein drahtlos auslesbares Speicherelement 51, 52, 53, 54 angebracht ist. Jedes der drahtlos auslesbaren Speicherelemente 51, 52, 53, 54 kann entweder als passives Speicherelement 51, 52, 53, 54, das ohne eigene Energieversorgung auskommt, insbesondere als RFID-Speicherelement, oder als aktives Speicherelement 51, 52, 53, 54 ausgebildet sein, das eine eigene Sendeeinheit und eine eigene Energieversorgung, insbesondere eine elektrochemische Batterie oder einen wiederaufladbaren Akku aufweist.

Die in den drahtlos auslesbaren Speicherelementen 51, 52, 53, 54 gespeicherten Daten umfassen insbesondere auch eine für jede Komponente 41, 42, 43, 44 eindeutige Identifikationsnummer, die es ermöglicht, jedes drahtlos auslesbare Speicherelemente 51, 52, 53, 54 und die ihm zugeordnete Komponente 41, 42, 43, 44 eindeutig zu identifizieren.

Das Fahrzeug 2 ist zusätzlich mit einer Datenlesevorrichtung 6 ausgestattet, die so ausgebildet ist, dass sie in der Lage ist, die in den drahtlos auslesbaren Speicherelementen 51, 52, 53, 54 gespeicherten Daten drahtlos auszulesen und an eine ebenfalls in dem Fahrzeug 2 vorgesehen Fahrzeug-Sendevorrichtung 8 zu übertragen.

Die Datenlesevorrichtung 6 und die Fahrzeug-Sendevorrichtung 8 können, wie in der Figur gezeigt, als separate Elemente bzw. Geräte ausgebildet sein; die beiden Vorrichtungen 6, 8 können aber auch in einer gemeinsamen Datenlese- und Sendevorrichtung 6, 8 zusammengefasst sein.

Die Fahrzeug-Sendevorrichtung 8 ist ausgebildet, um die Daten, die von der Datenlesevorrichtung 6 an sie übertragen worden sind, z.B. über eine Antenne 10, die innerhalb oder außerhalb des Fahrzeugs 2 angeordnet sein kann, auszusenden, um sie an eine in der näheren Umgebung des Fahrzeugs 2, insbesondere in einem Werkstattumfeld, angeordnete Empfangsvorrichtung 12, die ebenfalls eine Antenne 14 aufweisen kann, zu übertragen.

Die Datenübertragung kann mit Hilfe elektromagnetischer Wellen außerhalb des optischen Bereichs (z.B. über Bluetooth®, WLAN usw.) oder innerhalb des optisch Bereichs, beispielsweise Infrarotlicht, erfolgen.

Die Übertragung der Daten von dem Fahrzeug 2 an die Empfangsvorrichtung 12 kann insbesondere über ein zur Datenübertragung geeignetes Mobilfunknetz und/oder das Internet erfolgen. Bei Nutzung eines Mobilfunknetzes und/oder des Internets kann die Datenübertragung über eine größere Distanz erfolgen, so dass die Datenübertragung jederzeit, insbesondere unabhängig von Werkstattbesuchen, durchgeführt werden kann und Lücken in der Aufzeichnung vermieden werden können.

Die Empfangsvorrichtung 12 ist Bestandteil eines Werkstattsystems 15, das neben der Empfangsvorrichtung 12 auch eine Auswertevorrichtung 24 umfasst, die ausgebildet ist, die an die Empfangsvorrichtung 12 übertragenen Daten auszuwerten, insbesondere um die Art, die Anzahl und/oder die Identität von in dem Fahrzeug 2 verbauten Komponenten 41, 42, 43, 44 zu ermitteln.

Dazu hat das System auch wenigstens eine Speichervorrichtung 16, die zur Speicherung von Komponenten-Identifikationsdaten, die jeweils einer Komponente zu geordnet sind, ausgebildet ist, und eine Vergleichseinheit 26, die ausgebildet ist, um die an die Empfangsvorrichtung 12 übertragenen Daten mit den in der Speichervorrichtung 16 gespeicherten Komponenten-Identifikationsdatensätzen zu vergleichen und einen Identifikationsdatensatz zu bestimmen, der die an die Empfangsvorrichtung 12 übertragenen Daten enthält, um auf diese Weise Art, Anzahl und/oder Identität der in dem Fahrzeug 2 verbauten Komponenten 41, 42, 43, 44 zu bestimmen.

Das Werkstattsystem 15 kann zusätzlich auch eine Anzeigevorrichtung 18 und/oder eine Eingabevorrichtung 20 aufweisen, die es ermöglichen, die in der Speichervorrichtung 16 gespeicherten Daten anzuzeigen, zu verändern und/oder zu ergänzen.

Erfindungsgemäß weist das Werkstattsystem 15 zusätzlich eine Sendevorrichtung 13 auf, und das Fahrzeug 2 weist zusätzlich eine Fahrzeug-Empfangsvorrichtung 9 auf, die ausgebildet ist, um Daten, die von der Sendevorrichtung 13 ausgesendet worden sind, zu empfangen und auf diese Weise zusätzlich zur Übertragung von Daten von dem Fahrzeug 2 an das Werkstattsystem 15 auch eine Übertragung von Daten in der entgegengesetzten Richtung, d.h. von dem Werkstattsystem 15 an das Fahrzeug 2, zu ermöglichen.

Die Datenübertragung kann mit Hilfe elektromagnetischer Wellen außerhalb des optischen Bereichs (z.B. über Bluetooth®, WLAN usw.) oder innerhalb des optisch Bereichs, der insbesondere Infrarotlicht umfasst, erfolgen.

Die Übertragung der Daten von der Sendevorrichtung 13 an das Fahrzeug 2 kann insbesondere über ein zur Datenübertragung geeignetes Mobilfunknetz und/oder das Internet erfolgen.

Die Fahrzeug-Sendevorrichtung 8 und die Fahrzeug-Empfangsvorrichtung 9 sowie die Sendevorrichtung 13 und die Empfangsvorrichtung 12 können jeweils auch als kombinierte Sende- und Empfangsvorrichtung ausgebildet sein.

Die im Fahrzeug 2 installierten Fahrzeug-Empfangsvorrichtung 9 ist vorzugsweise mit einem Fahrzeug- bzw. Motorsteuergerät 22 verbunden, um es zu ermöglichen, Daten von dem Werkstattsystem 15 mit Hilfe der Sendevorrichtung 13 und der Fahrzeug-Empfangsvorrichtung 9 an das Fahrzeug- bzw. Motorsteuergerät 22 zu übertragen. Dies ermöglicht es, Parameter des Fahrzeug- bzw. Motorsteuergeräts 22, insbesondere auf der Grundlage der in dem Fahrzeug 2 verbauten Komponenten 41, 42, 43, 44, zu verändern und insbesondere an die in dem Fahrzeug 2 verbauten Komponenten 41, 42, 43, 44 anzupassen.

Erfindungsgemäß wird eine Fahrzeug- bzw. Motorsteuergerät-Software aus einem Software-Speicher 17 des Werkstattsystems 15 ausgelesen und über die Sendevorrichtung 13 und die Fahrzeug-Empfangsvorrichtung 9 an das Fahrzeug- bzw. Motorsteuergerät 22 übertragen, um das Fahrzeug- bzw. Motorsteuergerät 22 mit einer geeigneten, insbesondere aktuellen Fahrzeug- bzw. Motorsteuergerät-Software zu betreiben. Die Fahrzeug- bzw. Motorsteuergerät-Software wird dabei in Abhängigkeit der von der Auswertevorrichtung bestimmten Komponenten-Konfiguration des Fahrzeugs 2, d.h. insbesondere der Art, Anzahl und/oder Identität der im Fahrzeug 2 verbauten Komponenten 41, 42, 43, 44 ausgewählt, um das Fahrzeug- bzw. Motorsteuergerät 22 mit einer optimal an die aktuelle Komponenten-Konfiguration des Fahrzeugs 2 angepassten Software zu betreiben.

Insbesondere kann die Software aktualisiert werden, wenn die Art, Anzahl und/oder Identität der im Fahrzeug 2 verbauten Komponenten 41, 42, 43, 44 verändert worden sind und/oder wenn im Software-Speicher 17 des Werkstattsystems 15 für die Kombination der aktuell im Fahrzeug 2 verbauten Komponenten 41, 42, 43, 44 eine aktualisierte Software zur Verfügung steht.

Zu definierten Zeitpunkten, z.B. beim Starten und/oder beim Abschalten des Fahrzeugs 2, insbesondere des Fahrzeugmotors, oder in regelmäßigen zeitlichen Abständen, z.B. jeden Tag, jede Woche oder jeden Monat, und/oder nach einer vorgegebenen Anzahl von Start- und/oder Stoppvorgängen, können die Datenlesevorrichtung 6 und die Fahrzeug-Sendevorrichtung 8 beispielsweise vom dem Fahrzeugsteuergerät 22 aktiviert werden, um die Daten aus den im Fahrzeug 2 installierten Speicherelementen 51, 52, 53, 54 auszulesen und von der Fahrzeug-Sendevorrichtung 8 an das Werkstattsystems 15 zu übertragen.

Die von der Fahrzeug-Sendevorrichtung 8 ausgesendeten Daten werden von der Empfangsvorrichtung 12 empfangen und an die Speichervorrichtung 16 weitergeleitet und dort gespeichert. Auf diese Weise sind in der Speichervorrichtung 16 stets Daten gespeichert, welche die aktuelle Komponenten-Konfiguration des Fahrzeugs 2, d.h. insbesondere die Art, Anzahl und/oder Identität der im Fahrzeug 2 verbauten Komponenten 41, 42, 43, 44, exakt beschreiben.

Die Speichervorrichtung 16 kann, wie in der Figur gezeigt, Bestandteil des Werkstattsystems 15, alternativ aber auch als Teil einer "virtuellen Datenwolke" ("Cloud") ausgebildet sein, auf die über das Internet zugegriffen werden kann.

Werden die Daten des Fahrzeugs 2 in einer "virtuellen Datenwolke" ("Cloud") gespeichert, stehen sie an allen Orten zur Verfügung, an denen ein Zugang zum Internet möglich ist, und können so bei Bedarf, insbesondere im Reparatur- und/oder Pannenfall, schnell abgerufen werden.

Die Auswertevorrichtung 24 kann zusätzlich auch eine Konfigurationsvergleichsvorrichtung 25 aufweisen, die ausgebildet ist, um die aktuell übertragene Konfiguration eines Fahrzeugs 2 mit einer zu einem früheren Zeitpunkt übertragenen und in einer Konfigurationsspeichervorrichtung 27 gespeicherten Konfiguration desselben Fahrzeugs 2 zu vergleichen und auf diese Weise mögliche Veränderungen der Konfiguration des Fahrzeugs 2 zu erfassen und ggf. anzuzeigen.

Alternativ oder zusätzlich kann auch im Fahrzeug 2 eine Fahrzeugkonfigurationsvergleichsvorrichtung 7 mit einem lokalen Speicher 7a vorgesehen sein. Der lokale Speicher 7a ist ausgebildet, Daten zu speichern, die zu einem ersten Zeitpunkt aus wenigstens einem der drahtlos auslesbaren Speicherelemente 51, 52, 53, 54 ausgelesen worden sind, und die Fahrzeugkonfigurationsvergleichsvorrichtung 7 ist ausgebildet, Daten, die zu einem zweiten, späteren Zeitpunkt aus wenigstens einem der drahtlos auslesbaren Speicherelemente 51, 52, 53, 54 ausgelesen worden sind, mit den im lokalen Speicher 7a gespeicherten Daten, die zu dem ersten, früheren Zeitpunkt ausgelesen worden sind, zu vergleichen und nur dann mit Hilfe der Fahrzeug-Sendevorrichtung 8 Daten von dem Fahrzeug 2 an das Werkstattsystem 15 zu übertragen, wenn sich die zum zweiten, späteren Zeitpunkt ausgelesenen Daten von den im lokalen Speicher 7a gespeicherten Daten, unterscheiden. Auf diese Weise können unnötige Datenübertragungen vermieden werden.

Zusätzlich kann auch die aktuelle Kilometerleistung des Fahrzeugs 2 aus dem Steuergerät 22 ausgelesen und von der Fahrzeug-Sendevorrichtung 8 an das Werkstattsystem 15 übertragen worden.

Mithilfe der von dem Fahrzeug 2 an die Empfangsvorrichtung 12 übertragener Daten kann, insbesondere wenn die übertragenen Daten auch die aktuelle Kilometerleistung umfassen, in der Speichervorrichtung 16 vollautomatisch ein "Logbuch" des Fahrzeugs 2, seiner Konfiguration und der im Fahrzeug 2 verbauten Komponenten 41, 42, 43, 44 angelegt und auf dem aktuellen Stand gehalten werden.

Auf diese Weise kann die Konfiguration des Fahrzeugs 2 jederzeit, insbesondere auch rückblickend, nachvollzogen werden und Manipulationen der Konfiguration des Fahrzeugs 2 können einfach, zuverlässig und schnell erkannt werden.

Die Daten der Konfiguration des Fahrzeugs 2 sind über die gesamte Lebensdauer des Fahrzeugs 2 verfügbar und können, z.B. für die Produktentwicklung und/oder -aufbereitung, genutzt werden, um die Produktqualität zu verbessern.

Da die Komponenten 41, 42, 43, 44 des Fahrzeugs 2 mit einem erfindungsgemäßen System individuell identifizierbar und eindeutig dem Fahrzeug 2 zuordbar sind, können zur Dokumentation von Tests Messdaten des Fahrzeugs 2 einfach mit der jeweils betroffenen Komponente 41, 42, 43, 44 in Verbindung gebracht werden. Dadurch können Tests neuer Komponenten 41, 42, 43, 44 einfacher und schneller als bisher durchgeführt werden, und fehlerhafte Komponenten 41, 42, 43, 44 können schnell und zuverlässig identifiziert und lokalisiert werden.

Wenn z.B. die Sensorik im Fahrzeug 2 feststellt, dass der Injektor im ersten Zylinder des Motors fehlerhaft ist, kann diese Information eindeutig mit dem betroffenen Injektor in Verbindung gebracht werden, da bekannt ist, welcher Injektor in welchem Zylinder und insbesondere im ersten Zylinder verbaut ist. Somit können für jeden Injektor das Ausmaß seiner Beanspruchung, sein Fehlerbild usw. dem jeweiligen Injektor zugeordnet und dokumentiert werden.

Bisher muss zur Dokumentation von Fahrzeug- bzw. Komponententests die Konfiguration der Komponenten 41, 42, 43, 44 im Fahrzeug 2 über manuelle Teile-Listen protokolliert werden, die einmal vollständig erstellt und beim Austausch von Komponenten 41, 42, 43, 44 manuell aktualisiert werden müssen, was aufwändig und fehleranfällig ist. Insbesondere wenn während einer Testfahrt Komponenten 41, 42, 43, 44 ersetzt werden müssen, z.B. weil Schäden aufgetreten sind, ist nicht immer sichergestellt, dass die Teile-Listen zeitnah korrekt und vollständig aktualisiert werden.

Derartige Fehler können ausgeschlossen werden, indem ein erfindungsgemäßes System verwendet wird, durch das die Teile-Listen automatisch aktualisiert werden. Zudem kann bei Tests, die nach dem Einbau einer neuen Komponente 41, 42, 43, 44 durchgeführt werden, die notwendige Software-Anpassung des Steuergeräts (z.B. Treiber) durch die Online-Anbindung ins Fahrzeug 2, wie zuvor beschrieben, automatisch erfolgen, so dass der Aufwand für eine manuelle Aktualisierung der Software entfällt.

## Patentansprüche

1. System zum Erfassen von Komponenten (41, 42, 43, 44) eines Kraftfahrzeugs, welches das Kraftfahrzeug (2) und mehrere Komponenten (41, 42, 43, 44) umfasst, mit drahtlos auslesbaren Speicherelementen (51, 52, 53, 54), die den Komponenten (41, 42, 43, 44) des Kraftfahrzeugs (2) zugeordnet sind;
wenigstens einer, insbesondere in dem Kraftfahrzeug (2) angeordneten, Datenlesevorrichtung (6), die ausgebildet ist, um Daten, die in den Speicherelementen (51, 52, 53, 54) gespeichert sind, drahtlos auszulesen;
wenigstens einer, insbesondere in dem Kraftfahrzeug (2) angeordneten, Sendevorrichtung (8), die ausgebildet ist, um die von der wenigstens einen Datenlesevorrichtung (6) ausgelesenen Daten an wenigstens eine Empfangsvorrichtung (12) zu übertragen; und mit einem Motorsteuergerät (22);
mit einem Werkstattsystem (15), welches die Empfangsvorrichtung (12), eine Auswertevorrichtung (24) und einen Software-Speicher (17) umfasst, wobei die Auswertevorrichtung (24) ausgebildet ist, auf Grundlage der an die Empfangsvorrichtung (12) übertragenen Daten eine Komponenten-Konfiguration des Kraftfahrzeugs (2), das heißt die Art, Anzahl und Identität der in dem Kraftfahrzeug (2) verbauten Komponenten (41, 42, 43, 44) zu bestimmen und wobei das Werkstattsystem (15) ausgebildet ist, eine Motorsteuergeräte-Software für das Motorsteuergerät (22) des Kraftfahrzeugs (2) in Abhängigkeit von der bestimmten Komponenten-Konfiguration des Kraftfahrzeugs (2) auszuwählen, wenn im Software-Speicher (17) für die Kombination der aktuell im Kraftfahrzeug (2) verbauten Komponenten (41, 42, 43, 44) eine aktualisierte Software zur Verfügung steht; ;
wobei das Werkstattsystem (15) zusätzlich eine Sendevorrichtung (13) aufweist, die ausgebildet ist, die ausgewählte Motorsteuergeräte-Software drahtlos an das Kraftfahrzeug (2) zu übertragen; und mit
einer Kraftfahrzeug-Empfangsvorrichtung (9), die ausgebildet ist, die ausgewählte Motorsteuergeräte-Software zu empfangen und in das Motorsteuergerät (22) des Kraftfahrzeugs (2) einzuspielen, um das Motorsteuergerät (22) an die aktuelle Komponenten-Konfiguration des Kraftfahrzeugs (2) anzupassen.

2. System nach Anspruch 1, wobei das System umfasst: wenigstens eine Speichervorrichtung (16), die zur Speicherung von Komponenten-IdentifikationsDatensätzen, die jeweils einer Komponente (41, 42, 43, 44) zugeordnet sind, ausgebildet ist; und eine Vergleichseinheit (26), die ausgebildet ist, um die an die Empfangsvorrichtung (12) übertragenen Daten mit Daten in den Komponenten-Identifikationsdatensätzen zu vergleichen und wenigstens einen Komponenten-Identifikationsdatensatz zu identifizieren, der die an die Empfangsvorrichtung (12) übertragenen Daten enthält, um auf diese Weise Art, Anzahl und/oder Identität der in dem Kraftfahrzeug (2) verbauten Komponenten (41, 42, 43, 44) zu bestimmen.

3. System nach einem der vorangehenden Ansprüche, wobei wenigstens ein Speicherelement (51, 52, 53, 54) als passives Speicherelement (51, 52, 53, 54), insbesondere als RFID-Element, ausgebildet ist.

4. System nach einem der vorangehenden Ansprüche, wobei wenigstens ein Speicherelement (51, 52, 53, 54) als aktives Speicherelement (51, 52, 53, 54) ausgebildet ist.

5. System nach einem der vorangehenden Ansprüche, wobei die Sende- und Empfangsvorrichtungen (8, 9, 12, 13) ausgebildet sind, um die Daten per Infrarotlicht und/oder elektromagnetisch, insbesondere über ein Mobilfunknetz, WLAN, Bluetooth®, und/oder über das Internet zu übertragen.

6. System nach einem der vorangehenden Ansprüche, wobei die Auswertevorrichtung zusätzlich eine Konfigurationsvergleichsvorrichtung (25) aufweist, die ausgebildet ist, um die aktuell aus wenigstens einem Speicherelement (51, 52, 53, 54) ausgelesenen und an die Empfangsvorrichtung (12) übertragenen Daten des Kraftfahrzeugs (2) mit zu einem früheren Zeitpunkt aus wenigstens einem Speicherelement (51, 52, 53, 54) ausgelesenen und an die Empfangsvorrichtung (12) übertragenen Daten desselben Kraftfahrzeugs (2) zu vergleichen, um mögliche Veränderungen der Komponenten-Konfiguration des Kraftfahrzeugs (2) zu erfassen.

7. System nach einem der vorherigen Ansprüche, wobei das System so eingerichtet ist, dass zu mindestens einem vorgegebenen Zeitpunkt, z.B. beim Starten und/ oder Stoppen des Kraftfahrzeugs (2), insbesondere eines im Kraftfahrzeug (2) angeordneten Motors, und/oder in vorgegebenen Zeitabständen, Daten aus wenigstens einem im oder am Kraftfahrzeug (2) angeordneten Speicherelement (51, 52, 53, 54) ausgelesen und von der wenigstens einen Sendevorrichtung (8) ausgesendet werden.

8. System nach einem der vorherigen Ansprüche, **dadurch gekennzeichnet, dass** das Kraftfahrzeug (2) eine Fahrzeugkonfigurationsvergleichsvorrichtung (7) (7) umfasst, die ausgebildet ist, um die aktuell aus wenigstens einem Speicherelement (51, 52, 53, 54) ausgelesenen Daten des Kraftfahrzeugs (2) mit einer zu einem früheren Zeitpunkt aus wenigstens einem Speicherelement (51, 52, 53, 54) ausgelesenen und übertragenen Daten desselben Kraftfahrzeugs (2) zu vergleichen, und nur dann Daten von dem Kraftfahrzeug (2) an die Empfangsvorrichtung (12) zu übertragen, wenn sich die aktuelle Konfiguration des Kraftfahrzeugs (2) bzw. seiner Komponenten (41, 42, 43, 44) von der zuletzt übertragenen Konfiguration unterscheidet.

9. Verfahren zum Erfassen von Komponenten (41, 42, 43, 44) eines Kraftfahrzeugs (2), das mehrere Komponenten (41, 42, 43, 44) umfasst, denen drahtlos auslesbare Speicherelemente (51, 52, 53, 54) zugeordnet sind, wobei das Verfahren die Schritte umfasst:
Daten, die in den Speicherelementen (51, 52, 53, 54) gespeichert sind, drahtlos aus den Speicherelementen (51, 52, 53, 54) auszulesen; und
die ausgelesenen Daten an wenigstens eine Empfangsvorrichtung (12) eines Werkstattsystems (15) zu übertragen, wobei das Verfahren zusätzlich die Schritte umfasst:
auf Grundlage der an die Empfangsvorrichtung (12) übertragenen Daten eine Komponenten-Konfiguration des Fahrzeugs (2), das heißt die Art, Anzahl und Identität der in dem Kraftfahrzeug (2) verbauten Komponenten (41, 42, 43, 44) mittels einer Auswertevorrichtung (24) des Werkstattsystems (15) zu bestimmen; eine Motorsteuergeräte-Software für ein Motorsteuergerät (22) des Kraftfahrzeugs (2) in Abhängigkeit von der bestimmten Komponenten-Konfiguration des Kraftfahrzeugs (2) auszuwählen, wenn in einem Software-Speicher (17) des Werkstattsystems (15) für die Kombination der aktuell im Kraftfahrzeug (2) verbauten Komponenten eine aktualisierte Software zur Verfügung steht;
die ausgewählte Motorsteuergeräte-Software drahtlos an das Kraftfahrzeug (2) zu übertragen und in das Motorsteuergerät (22) des Kraftfahrzeugs (2) einzuspielen, um das Motorsteuergerät (22) an die aktuelle Komponenten-Konfiguration des Kraftfahrzeugs (2) anzupassen.

10. Verfahren nach Anspruch 9, das zusätzlich umfasst:
die an die Empfangsvorrichtung (12) übertragenen Daten mit Daten in gespeicherten Komponenten-Identifikationsdatensätzen, die jeweils einer Komponente (41, 42, 43, 44) zugeordnet sind, zu vergleichen und einen Komponenten-Identifikationsdatensatz zu identifizieren, der die an die Empfangsvorrichtung (12) übertragenen Daten enthält, um so Art, Anzahl und/oder Identität der in dem Kraftfahrzeug (2) verbauten Komponenten (41, 42, 43, 44) zu bestimmen.

## Claims

1. System for capturing components (41, 42, 43, 44) of a motor vehicle, which system comprises the motor vehicle (2) and a plurality of components (41, 42, 43, 44), with
wirelessly readable storage elements (51, 52, 53, 54) which are assigned to the components (41, 42, 43, 44) of the motor vehicle (2);
at least one data reading apparatus (6) which is arranged, in particular, in the motor vehicle (2) and is designed to wirelessly read data stored in the storage elements (51, 52, 53, 54);
at least one transmitting apparatus (8) which is arranged, in particular, in the motor vehicle (2) and is designed to transmit the data read by the at least one data reading apparatus (6) to at least one receiving apparatus (12); and with an engine control unit (22);
with a repair shop system (15) which comprises the receiving apparatus (12), an evaluation apparatus (24) and a software memory (17), wherein the evaluation apparatus (24) is designed to determine a component configuration of the motor vehicle (2), that is to say the type, number and identity of the components (41, 42, 43, 44) installed in the motor vehicle (2), on the basis of the data transmitted to the receiving apparatus (12), and wherein the repair shop system (15) is designed to select engine control unit software for the engine control unit (22) of the motor vehicle (2) on the basis of the determined component configuration of the motor vehicle (2) if updated software is available in the software memory (17) for the combination of components (41, 42, 43, 44) currently installed in the motor vehicle (2);
wherein the repair shop system (15) additionally has a transmitting apparatus (13) which is designed to wirelessly transmit the selected engine control unit software to the motor vehicle (2); and with a motor vehicle receiving apparatus (9) which is designed to receive the selected engine control unit software and to install it in the engine control unit (22) of the motor vehicle (2) in order to adapt the engine control unit (22) to the current component configuration of the motor vehicle (2).

2. System according to Claim 1, wherein the system comprises: at least one storage apparatus (16) which is designed to store component identification data sets which are each assigned to a component (41, 42, 43, 44) ; and a comparison unit (26) which is designed to compare the data transmitted to the receiving apparatus (12) with data in the component identification data sets and to identify at least one component identification data set which contains the data transmitted to the receiving apparatus (12) in order to determine in this manner the type, number and/or identity of the components (41, 42, 43, 44) installed in the motor vehicle (2).

3. System according to one of the preceding claims, wherein at least one storage element (51, 52, 53, 54) is in the form of a passive storage element (51, 52, 53, 54), in particular in the form of an RFID element.

4. System according to one of the preceding claims, wherein at least one storage element (51, 52, 53, 54) is in the form of an active storage element (51, 52, 53, 54).

5. System according to one of the preceding claims, wherein the transmitting and receiving apparatuses (8, 9, 12, 13) are designed to transmit the data by means of infrared light and/or electromagnetically, in particular via a mobile radio network, WLAN, Bluetooth® and/or the Internet.

6. System according to one of the preceding claims, wherein the evaluation apparatus additionally has a configuration comparison apparatus (25) which is designed to compare the data relating to the motor vehicle (2) which are currently read from at least one storage element (51, 52, 53, 54) and are transmitted to the receiving apparatus (12) with data relating to the same motor vehicle (2) which were read from at least one storage element (51, 52, 53, 54) at an earlier time and were transmitted to the receiving apparatus (12), in order to capture possible changes in the component configuration of the motor vehicle (2).

7. System according to one of the preceding claims, wherein the system is configured in such a manner that, at at least one predefined time, for example when starting and/or stopping the motor vehicle (2), in particular an engine arranged in the motor vehicle (2), and/or at predefined intervals of time, data are read from at least one storage element (51, 52, 53, 54) arranged in or on the motor vehicle (2) and are transmitted by the at least one transmitting apparatus (8).

8. System according to one of the preceding claims, **characterized in that** the motor vehicle (2) comprises a vehicle configuration comparison apparatus (7) which is designed to compare the data relating to the motor vehicle (2) which are currently read from at least one storage element (51, 52, 53, 54) with data relating to the same motor vehicle (2) which were read from at least one storage element (51, 52, 53, 54) at an earlier time and were transmitted and to transmit data from the motor vehicle (2) to the receiving apparatus (12) only when the current configuration of the motor vehicle (2) or of its components (41, 42, 43, 44) differs from the configuration transmitted last.

9. Method for capturing components (41, 42, 43, 44) of a motor vehicle (2) comprising a plurality of components (41, 42, 43, 44) which are assigned wirelessly readable storage elements (51, 52, 53, 54), wherein the method comprises the steps of:
wirelessly reading data stored in the storage elements (51, 52, 53, 54) from the storage elements (51, 52, 53, 54); and
transmitting the data which have been read to at least one receiving apparatus (12) of a repair shop system (15), wherein the method additionally comprises the steps of:
determining a component configuration of the vehicle (2), that is to say the type, number and identity of the components (41, 42, 43, 44) installed in the motor vehicle (2), on the basis of the data transmitted to the receiving apparatus (12) by means of an evaluation apparatus (24) of the repair shop system (15), selecting engine control unit software for an engine control unit (22) of the motor vehicle (2) on the basis of the determined component configuration of the motor vehicle (2) if updated software is available in a software memory (17) of the repair shop system (15) for the combination of components currently installed in the motor vehicle (2) ;
wirelessly transmitting the selected engine control unit software to the motor vehicle (2) and installing it in the engine control unit (22) of the motor vehicle (2) in order to adapt the engine control unit (22) to the current component configuration of the motor vehicle (2).

10. Method according to Claim 9, which additionally comprises:
comparing the data transmitted to the receiving apparatus (12) with data in stored component identification data sets each assigned to a component (41, 42, 43, 44) and identifying a component identification data set containing the data transmitted to the receiving apparatus (12) in order to thus determine the type, number and/or identity of the components (41, 42, 43, 44) installed in the motor vehicle (2).

## Revendications

1. Système permettant de détecter des composants (41, 42, 43, 44) d'un véhicule automobile, comprenant le véhicule automobile (2) et plusieurs composants (41, 42, 43, 44), comprenant
des éléments de mémoire (51, 52, 53, 54) à lecture sans fil qui sont associés aux composants (41, 42, 43, 44) du véhicule automobile (2) ;
au moins un dispositif de lecture de données (6), en particulier disposé dans le véhicule automobile (2), qui est réalisé pour la lecture sans fil des données qui sont mémorisées dans les éléments de mémoire (51, 52, 53, 54) ;
au moins un dispositif d'émission (8), en particulier disposé dans le véhicule automobile (2), qui est réalisé pour transmettre les données lues par ledit au moins un dispositif de lecture de données (6) à au moins un dispositif de réception (12) ; et comprenant un appareil de commande de moteur (22) ;
comprenant un système d'atelier (15) qui comprend le dispositif de réception (12), un dispositif d'évaluation (24) et une mémoire de logiciel (17), le dispositif d'évaluation (24) étant réalisé pour déterminer, sur la base des données transmises au dispositif de réception (12), une configuration de composants du véhicule automobile (2), c'est-à-dire le type, le nombre et l'identité des composants (41, 42, 43, 44) installés dans le véhicule automobile (2), et le système d'atelier (15) étant réalisé pour sélectionner un logiciel d'appareil de commande de moteur pour l'appareil de commande de moteur (22) du véhicule automobile (2) en fonction de la configuration de composants déterminée du véhicule automobile (2) si un logiciel à jour est disponible dans la mémoire de logiciel (17) pour la combinaison des composants (41, 42, 43, 44) actuellement installés dans le véhicule automobile (2) ;
le système d'atelier (15) présentant de plus un dispositif d'émission (13) qui est réalisé pour la transmission sans fil du logiciel d'appareil de commande de moteur sélectionné au véhicule automobile (2) ; et comprenant
un dispositif de réception de véhicule automobile (9) qui est réalisé pour recevoir le logiciel d'appareil de commande de moteur sélectionné et l'importer dans l'appareil de commande de moteur (22) du véhicule automobile (2) afin d'adapter l'appareil de commande de moteur (22) à la configuration de composants actuelle du véhicule automobile (2).

2. Système selon la revendication 1, le système comprenant : au moins un dispositif de mémoire (16) qui est réalisé pour mémoriser des enregistrements d'identification de composant qui sont associés à un composant (41, 42, 43, 44) respectivement ; et une unité de comparaison (26) qui est réalisée pour comparer les données transmises au dispositif de réception (12) avec des données dans les enregistrements d'identification de composant et pour identifier au moins un enregistrement d'identification de composant qui contient les données transmises au dispositif de réception (12) afin de déterminer ainsi le type, le nombre et/ou l'identité des composants (41, 42, 43, 44) installés dans le véhicule automobile (2).

3. Système selon l'une quelconque des revendications précédentes, dans lequel au moins un élément de mémoire (51, 52, 53, 54) est réalisé sous la forme d'un élément de mémoire passif (51, 52, 53, 54), en particulier sous la forme d'un élément RFID.

4. Système selon l'une quelconque des revendications précédentes, dans lequel au moins un élément de mémoire (51, 52, 53, 54) est réalisé sous la forme d'un élément de mémoire (51, 52, 53, 54) actif.

5. Système selon l'une quelconque des revendications précédentes, dans lequel les dispositifs d'émission et de réception (8, 9, 12, 13) sont réalisés pour transmettre les données par lumière infrarouge et/ou de manière électromagnétique, en particulier par un réseau de téléphonie mobile, un WLAN, Bluetooth® et/ou par internet.

6. Système selon l'une quelconque des revendications précédentes, dans lequel le dispositif d'évaluation présente de plus un dispositif de comparaison de configuration (25) qui est réalisé pour comparer les données actuellement lues à partir d'au moins un élément de mémoire (51, 52, 53, 54) et transmises au dispositif de réception (12) du véhicule automobile (2) avec des données lues à un instant antérieur à partir d'au moins un élément de mémoire (51, 52, 53, 54) et transmises au dispositif de réception (12) du même véhicule automobile (2) afin de détecter des modifications possibles de la configuration de composants du véhicule automobile (2).

7. Système selon l'une quelconque des revendications précédentes, dans lequel le système est aménagé de telle sorte qu'à au moins un instant prédéfini, par exemple au démarrage et/ou à l'arrêt du véhicule automobile (2), en particulier d'un moteur disposé dans le véhicule automobile (2), et/ou à intervalles prédéfinis, des données sont lues à partir d'au moins un élément de mémoire (51, 52, 53, 54) disposé dans ou sur le véhicule automobile (2) et émises par ledit au moins un dispositif d'émission (8).

8. Système selon l'une quelconque des revendications précédentes, **caractérisé en ce que** le véhicule automobile (2) comprend un dispositif de comparaison de configuration de véhicule (7) qui est réalisé pour comparer les données lues actuellement à partir d'au moins un élément de mémoire (51, 52, 53, 54) du véhicule automobile (2) avec des données lues à un instant antérieur à partir d'au moins un élément de mémoire (51, 52, 53, 54) et transmises du même véhicule automobile (2), et pour transmettre des données du véhicule automobile (2) au dispositif de réception (12) uniquement si la configuration actuelle du véhicule automobile (2) ou de ses composants (41, 42, 43, 44) est différente de la configuration transmise en dernier.

9. Procédé permettant de détecter des composants (41, 42, 43, 44) d'un véhicule automobile (2) qui comprend plusieurs composants (41, 42, 43, 44) auxquels des éléments de mémoire (51, 52, 53, 54) à lecture sans fil sont associés, le procédé comprenant les étapes consistant à :
lire sans fil des données qui sont mémorisées dans les éléments de mémoire (51, 52, 53, 54) à partir des éléments de mémoire (51, 52, 53, 54) ; et
transmettre les données lues à au moins un dispositif de réception (12) d'un système d'atelier (15), le procédé comprenant en outre les étapes consistant à :
sur la base des données transmises au dispositif de réception (12), déterminer une configuration de composants du véhicule (2), c'est-à-dire le type, le nombre et l'identité des composants (41, 42, 43, 44) installés dans le véhicule automobile (2) au moyen d'un dispositif d'évaluation (24) du système d'atelier (15) ; sélectionner un logiciel d'appareil de commande de moteur pour un appareil de commande de moteur (22) du véhicule automobile (2) en fonction de la configuration de composants déterminée du véhicule automobile (2) si un logiciel à jour est disponible dans une mémoire de logiciel (17) du système d'atelier (15) pour la combinaison des composants actuellement installés dans le véhicule automobile (2) ;
transmettre sans fil le logiciel d'appareil de commande de moteur sélectionné au véhicule automobile (2) et l'importer dans l'appareil de commande de moteur (22) du véhicule automobile (2) afin d'adapter l'appareil de commande de moteur (22) à la configuration de composants actuelle du véhicule automobile (2).

10. Procédé selon la revendication 9, comprenant en outre :
comparer les données transmises au dispositif de réception (12) avec des données dans des enregistrements d'identification de composant mémorisés qui sont associés à un composant (41, 42, 43, 44) respectivement, et identifier un enregistrement d'identification de composant qui contient les données transmises au dispositif de réception (12) afin de déterminer ainsi le type, le nombre et/ou l'identité des composants (41, 42, 43, 44) installés dans le véhicule automobile (2).
